# EUROPÄISCHE PATENTSCHRIFT

(11) **EP 3 058 247 B1**
(45) Veröffentlichungstag und Bekanntmachung des Hinweises auf die Patenterteilung: **12.07.2017**
(21) Anmeldenummer: 14766492.4
(22) Anmeldetag: 17.09.2014
(51) Int. Cl.: F16H 59/08, G05G 5/06, G05G 1/08, F16H 61/22

(54) **VORRICHTUNG ZUM SPERREN EINES BEDIENELEMENTS EINES AUTOMATIKGETRIEBES EINES FAHRZEUGS, VERFAHREN ZUM BETREIBEN EINER DERARTIGEN VORRICHTUNG UND SCHALTVORRICHTUNG ZUM SCHALTEN EINES AUTOMATIKGETRIEBES EINES FAHRZEUGS**
DEVICE FOR LOCKING AN OPERATING ELEMENT OF AN AUTOMATIC TRANSMISSION OF A VEHICLE, METHOD FOR OPERATING SUCH A DEVICE AND SWITCHING DEVICE FOR SWITCHING AN AUTOMATIC TRANSMISSION OF A VEHICLE
DISPOSITIF DE VERROUILLAGE D'UN ÉLÉMENT DE RÉGLAGE D'UNE BOÎTE DE VITESSES AUTOMATIQUE D'UN VÉHICULE, PROCÉDÉ DE FONCTIONNEMENT D'UN TEL DISPOSITIF ET DISPOSITIF DE COMMUTATION D'UNE BOÎTE DE VITESSES AUTOMATIQUE D'UN VÉHICULE

(30) Priorität: 17.10.2013 DE 102013221039
(43) Veröffentlichungstag der Anmeldung: 24.08.2016
(73) Patentinhaber: ZF Friedrichshafen AG, 88046 Friedrichshafen (DE); Lemförder-Electronic GmbH, 32339 Espelkamp (DE)
(72) Erfinder: RAKE, Ludger, 49439 Steinfeld (DE); GIEFER, Andreas, 49448 Lemfoerde (DE); ROSENTRETER, Sascha, 32339 Espelkamp (DE); HARTRAMPF, Ralf, 49419 Wagenfeld (DE)
(86) Internationale Anmeldenummer: PCT/EP2014/069762
(87) Internationale Veröffentlichungsnummer: WO 2015/055369

(56) Entgegenhaltungen:
- WO-A1-2006/021198
- DE-A1- 10 059 383
- DE-A1-102006 007 600
- US-A1- 2004 229 726
- US-A1- 2009 217 782

## Beschreibung

Die vorliegende Erfindung bezieht sich auf eine Vorrichtung zum Sperren eines Bedienelements eines Automatikgetriebes eines Fahrzeugs, auf ein Verfahren zum Betreiben einer derartigen Vorrichtung sowie auf eine Schaltvorrichtung zum Schalten eines Automatikgetriebes eines Fahrzeugs.

Im Fahrzeugbereich sind Schaltbetätigungen für Automatikgetriebe mit multistabilen Schaltstellungen wie z. B. "P", "R", "N", "D" sowie einer sogenannten "Shiftlock"-Funktion in den Schaltstellungen P und N bekannt und teilweise mit einer sogenannten "AutoP"-Funktion, d. h., einer automatischen getriebeseitigen Parksperre, ausgerüstet. Bei der Shiftlockfunktion wird der Schalthebel blockiert und erst nach der Betätigung der Bremse wieder freigegeben. Die Shiftlockfunktion wird in der Regel durch einen Aktor, z. B. einen Elektromagneten, realisiert. Bei AutoP wird, wenn im Getriebe die Parksperre eingelegt wurde, auch umgehend an der Schaltbetätigung die P-Position wiederum mittels eines Aktors eingelegt.

Die DE 10 2006 007 600 A1 offenbart einen Drehsteller für elektrische oder elektronische Geräte in einem Kraftfahrzeug.

Die DE 102004041087 A1, welche alle Merkmale des Oberbegriffs des Anspruchs 1 und des Anspruchs 10 zeigt, offenbart eine Betätigungseinrichtung für ein shiftby-wire-Fahrzeuggetriebe, wobei die Betätigungseinrichtung umfasst eine Drehknauf, mit zumindest zwei Schaltstellungen. Die Drehknauf ist für sich genommen unbegrenzt rotierbar, wobei die Betätigungseinrichtung zumindest eine gesteuert verstellbare Anschlageinrichtung zur Begrenzung des Drehwinkels des Betätigungselements umfasst. Hierdurch wird eine Betätigungseinrichtung geschaffen, die eine intuitive, sichere und fehlerfreie Betätigung auch komplexer technischer Systeme ermöglicht, ähnlich wie dies beispielsweise bei diskrete Rastpositionen aufweisenden, mechanischen oder elektromechanischen Betätigungselementen der Fall ist. Gleichzeitig wird eine eindeutige, intuitiv erfassbare, insbesondere taktile Rückmeldung des Systemzustands realisiert.

Vor diesem Hintergrund schafft die vorliegende Erfindung eine verbesserte Vorrichtung zum Sperren eines Bedienelements eines Automatikgetriebes eines Fahrzeugs, ein verbessertes Verfahren zum Betreiben einer Vorrichtung zum Sperren eines Bedienelements eines Automatikgetriebes eines Fahrzeugs sowie eine verbesserte Schaltvorrichtung zum Schalten eines Automatikgetriebes eines Fahrzeugs.

Die Ausführung eines Rückstellrings einer Automatikgetriebe-Schaltvorrichtung eines Fahrzeugs mit einer Steuerkontur ermöglicht in Verbindung mit einem geeignet angeordneten Sperrelement über eine Drehung des Rückstellrings eine Sperrung bzw. Entsperrung eines mit dem Rückstellring gekoppelten oder koppelbaren Bedienelements der Schaltvorrichtung. In einer weiteren Funktion kann der Rückstellring ausgebildet sein, um eine Rückstellung des Bedienelements aus einer AutoP-Funktion in eine Parkposition zu ermöglichen.

Gemäß dem hier vorgestellten Ansatz der Erweiterung des Rückstellrings für eine AutoP-Funktion durch eine Steuerkontur für ein Sperrelement einer Shiftlockfunktion kann eine Integration dieser Funktionen hinsichtlich Kosten und Package optimal umgesetzt werden. Auch eine weitere Funktion der Entkoppelung einer Rastierung eines Rastierkamms der Schaltvorrichtung kann integriert werden.

Insbesondere ist für die hierin vorgestellte Funktionsrealisierung lediglich ein einziger Aktor bzw. Elektromotor erforderlich.

Eine Vorrichtung zum Sperren eines Bedienelements eines Automatikgetriebes eines Fahrzeugs umfasst einen direkt mit dem Bedienelement koppelbaren drehbar gelagerten Rastierkamm mit einer Sperrkontur, wobei der Rastierkamm eine durch eine Mehrzahl von kammartig angeordneten Erhebungen gekennzeichnete Rastierkontur aufweist, ein Sperrelement, das ausgebildet ist, um in einer ersten Position außerhalb der Sperrkontur angeordnet zu sein, um zum Zulassen einer Verstellbewegung des Bedienelements den Rastierkamm für eine Drehbewegung freizugeben, und in einer zweiten Position in der Sperrkontur angeordnet zu sein, um zum Sperren des Bedienelements den Rastierkamm zu fixieren, und einen drehbar gelagerten Stellring mit einer Steuerkontur zum Führen des Sperrelements zwischen der ersten Position und der zweiten Position.

Bei der Vorrichtung kann es sich um ein Gerät oder einen Teil eines Geräts des Fahrzeugs handeln. Bei dem Fahrzeug kann es sich um ein straßengebundenes Fahrzeug wie einen Personenkraftwagen oder einen Lastkraftwagen handeln. Bei dem Bedienelement kann es sich um einen Ring oder Schalthebel des Automatikgetriebes handeln, der beispielsweise von einem Fahrer des Fahrzeugs mit der Hand bedient werden kann, um unterschiedliche Gänge des Automatikgetriebes einzustellen. Beispielsweise kann der Fahrer das Bedienelement z. B. durch Drehen oder Schieben zwischen den Positionen P für Parken, D für Fahren, R für Rückwärtsfahren und N für die Schaltung des Getriebes in den Leerlauf verstellen. Der Rastierkamm kann insbesondere bei einer Ausführung des Bedienelements in Form eines Drehknaufs ringförmig ausgebildet und parallel zu einer Drehebene des Bedienelements angeordnet sein. Der Rastierkamm dient zur Übertragung einer Betätigung des Bedienelements an das Automatikgetriebe und kann über mechanische Verbindungselemente mit dem Bedienelement so gekoppelt sein, dass eine Bewegung des Bedienelements eine gleichförmige, parallel verlaufende Bewegung bzw. Drehung des Rastierkamms bedingt. Der Rastierkamm weist eine durch eine Mehrzahl von kammartig angeordneten Erhebungen gekennzeichnete umlaufende Rastierkontur auf, über die eine Bewegung des Bedienelements optimal in eine Schaltstellung des Automatikgetriebes umgesetzt werden kann. Die Sperrkontur kann zwischen Erhebungen des Rastierkamms in Form einer geeignet dimensionierten Ausnehmung herausgebildet sein. Das Sperrelement kann in Bezug auf eine Drehbewegung des Rastierkamms ortsfest in der Vorrichtung, beispielsweise in einem Gehäuse oder einer Tragstruktur der Vorrichtung, angeordnet sein. Das Sperrelement kann beispielsweise quaderförmig ausgebildet sein und so in der Vorrichtung angeordnet sein, dass es entlang einer Längsachse der Quaderform zwischen der ersten und der zweiten Position bewegt werden kann. Das Sperrelement kann ausgebildet sein, um in der ersten Position weiter von einem Zentrum des kreisförmigen Rastierkamms entfernt zu sein als in der zweiten Position. Die in Bezug auf eine Drehbewegung des Rastierkamms ortsfeste Anordnung des Sperrelements kann beispielsweise über eine Ineingriffnahme des Sperrelements an einer Innenseite eines Gehäuses der Vorrichtung bewerkstelligt werden. Der Stellring kann als eine Scheibe mit zentraler Bohrung ausgeformt sein. Der Stellring kann parallel zu dem Rastierkamm in der Vorrichtung angeordnet sein. Die Steuerkontur kann einstückig mit dem Stellring gebildet sein und ausgebildet sein, um zum Bewegen des Sperrelements zwischen der ersten und der zweiten Position entlang desselben bewegt zu werden. Wenn das Sperrelement in der zweiten Position in die Sperrkontur eingreift, ist der Rastierkamm und somit das Bedienelement in Bezug auf eine Drehbewegung gesperrt. Somit kann das Bedienelement für eine Bedienung durch den Fahrer gesperrt werden. Durch eine Bewegung des Sperrelements in die erste Position können der Rastierkamm und somit auch das Bedienelement wieder bewegt werden. Der Fahrer kann somit das Automatikgetriebe wieder über das Bedienelement bedienen.

Gemäß einer Ausführungsform der Vorrichtung kann die Sperrkontur durch eine Ausnehmung in dem Rastierkamm gebildet sein, wobei eine Kontur der Ausnehmung einer Kontur des Sperrelements entsprechen kann. So kann bei einer Ausführung des Sperrelements als ein Quader die Ausnehmung entsprechend eine rechtwinklige U-Form aufweisen. Dabei können Dimensionen der Ausnehmung geringfügig größer als Dimensionen des Sperrelements sein, damit das Sperrelement verkantungsfrei in die Ausnehmung hinein- und wieder hinausbewegt werden kann. Mit dieser Ausführungsform kann das Sperrelement besonders schnell und mit nur geringer Verkantungsgefahr zwischen der ersten und der zweiten Position bewegt werden.

Beispielsweise kann die Steuerkontur durch eine in dem Stellring verlaufende Nut gebildet werden. Dabei kann die Nut in einem ersten Nutabschnitt näher bei einer Außenkontur als bei einer Innenkontur des Stellrings verlaufen und sich in einem zweiten Nutabschnitt der Innenkontur des Stellrings annähern, beispielsweise in e-dem zweiten Nutabschnitt in Richtung der Innenkontur des Stellrings abknicken. Dabei kann der erste Nutabschnitt ausgebildet sein, um das Sperrelement in der ersten Position zu führen. Der zweite Nutabschnitt kann ausgebildet sein, um das Sperrelement aus der ersten Position in die zweite Position zu führen. Die Nut kann entlang eines Verlaufs einer Ringform des Stellrings gebildet sein. Die Nut kann den Stellring vollständig durchstoßen oder lediglich in Form einer Vertiefung aus einer dem Sperrelement zugewandten Oberfläche des Stellrings herausgearbeitet sein. Eine als Nut ausgeführte Steuerkontur ist einfach zu fertigen und besonders wartungsarm.

Beispielsweise kann das Sperrelement an einer der Steuerkontur zugewandten Seite einen Fortsatz aufweisen, der ausgebildet sein kann, um zum Führen des Sperrelements mit der Steuerkontur im Eingriff zu sein. Der Fortsatz kann einstückig mit dem Sperrelement gebildet sein. Mithilfe des Fortsatzes kann das Sperrelement besonders exakt und positionsgenau sowie mit weniger Energieaufwand bewegt werden. Auch kann bei einer formschlüssigen Verbindung des Fortsatzes mit der Steuerkontur ein unbeabsichtigtes Herausrutschen des Sperrelements aus der Steuerkontur auf einfache Weise vermieden werden.

Die Vorrichtung kann so aufgebaut sein, dass der Rastierkamm zwischen dem Stellring und dem Bedienelement angeordnet ist und das Sperrelement radial bezüglich des Rastierkamms und des Stellrings angeordnet ist und ausgebildet ist, um in radialer Richtung bezüglich des Rastierkamms und des Stellrings zwischen der ersten Position und der zweiten Position bewegt zu werden. Mit der sandwichartigen Anordnung des Rastierkamms zwischen dem Stellring und dem Bedienelement kann der Rastierkamm seine Aufgabe, eine Drehung des Stellrings in eine Sperrung bzw. Entsperrung des Bedienelements umzusetzen in besonders funktionaler und Bauraum sparender Weise erfüllen. Die radiale Anordnung des Sperrelements gegenüber dem Rastierkamm ist besonders funktional, in dem die Fixierung bzw. Freigabe des Rastierkamms durch das Sperrelement quer zu einer Drehbewegungsrichtung des Rastierkamms erfolgt.

Gemäß einer weiteren Ausführungsform kann die Vorrichtung ferner einen Rastierstift aufweisen, der ausgebildet ist, um in einer ersten Position in eine Rasterung, beispielsweise eine Rasterkontur, des Rastierkamms einzugreifen. Somit kann durch Zusammenwirken des sich in der ersten Position befindlichen Rastierstifts mit der Rasterung des Rastierkamms eine Rastierungsfunktionalität realisiert werden. Das Bedienelement kann dabei nur durch Überwindung des Rastierstifts von einer Position in eine andere Position bewegt werden. Wenn sich der Rastierstift in der ersten Position befindet, kann der Rastierkamm, beispielsweise bei einer Betätigung des Bedienelements durch den Fahrer, somit nur über den Rastierstift hinweg bewegt werden. Der Rastierstift ist ferner ausgebildet, um in einer zweiten Position den Rastierkamm für eine freilaufende Drehbewegung freizugeben, also die Rastierungsfunktionalität auszusetzen. In der zweiten Position kann sich der Rastierstift außerhalb der Rastkontur des Rastierkamms befinden. Dabei kann der Rastierkamm ferner ein Anschlagelement aufweisen und der drehbar gelagerte Stellring kann ferner einen Steuernocken und eine Nase aufweisen kann. Dabei kann der Steuernocken ausgeformt sein, um bei einer Drehbewegung des Stellrings den Rastierstift aus der ersten Position in die zweite Position zu bewegen, und die Nase ausgeformt sein, um bei der Drehbewegung des Stellrings das Anschlagelement mitzunehmen, um den Rastierkamm, unter Umgehung der Rastierungsfunktionalität, zum Verstellen des Bedienelements ohne Überwinden der Rastierung in eine Parkposition zu drehen. Die Bewegung des Rastierstifts in die zweite Position kann entgegen einer Federkraft eines Federelements, mit dem der Rastierstift belastet ist, erfolgen. Das Anschlagelement kann zwischen Erhebungen des Rastierkamms angeordnet sein und eine senkrecht zu einer Drehebene des Rastierkamms verlaufende Anschlagfläche aufweisen. Der Steuernocken des Stellrings kann an einer Außenkontur des Stellrings in Form eines gerundeten Vorsprungs ausgeformt sein, während die Nase des Stellrings an einer Innenkontur des Stellrings ausgeformt sein kann. Die Nase kann insbesondere eine Konterfläche zum Anschlagen an die Anschlagfläche des Anschlagelements und Bildung eines Koppelpunktes zwischen dem Stellring und dem Rastierkamm aufweisen. Steuernocken und Nase können einstückig mit dem Stellring gebildet sein. Diese Ausführungsform ermöglicht eine vorteilhafte Kombination der Rückstellung des Bedienelements bei der sogenannten AutoP-Funktion mit der Shiftlockfunktion durch eine einfache Änderung der Drehrichtung des Stellrings. So kann die Rückstellung des Bedienelements mittels Drehung des Stellrings in einer Drehrichtung erzielt werden, während die Shiftlockfunktion durch Zurückdrehen des Stellrings in einer zu der Drehrichtung entgegengesetzten Drehrichtung aktiviert werden kann.

Insbesondere kann die Steuerkontur im Bereich des Steuernockens in dem Stellring verlaufen. So kann die Kombination aus AutoP-Funktion und Shiftlock besonders effektiv realisiert werden.

Ferner kann die Vorrichtung ein den Stellring mit einem Aktor koppelndes Koppelelement aufweisen. Das Koppelelement kann ausgebildet sein, um zum Erzeugen der Drehbewegung des Stellrings ein Drehmoment des Aktors auf den Stellring zu übertragen. Das Koppelelement kann beispielsweise als ein Zahnrad ausgeführt sein, das in paralleler Ebene angrenzend an den Stellring angeordnet sein kann und direkt oder indirekt mit diesem gekoppelt sein kann. Bei dem Aktor kann es sich z. B. um einen Elektromotor handeln. Mit dieser Ausführungsform kann eine Bewegung des Elektromotors auf einfache und kostengünstige Weise in eine erste Drehbewegung des Stellrings in eine erste Drehrichtung und eine zweite Drehbewegung des Stellrings in eine zu der ersten Drehrichtung entgegengesetzte zweite Drehrichtung umgesetzt werden.

Eine Schaltvorrichtung zum Schalten eines Automatikgetriebes eines Fahrzeugs umfasst ein Bedienelement, das ausgebildet ist, um zwischen einer Parkposition oder einer Leerlaufposition des Automatikgetriebes und zumindest einer Fahrposition des Automatikgetriebes verstellt zu werden, und eine Vorrichtung zum Sperren eines Bedienelements gemäß einem der vorangegangenen Ansprüche, wobei der Rastierkamm der Vorrichtung direkt mit dem Bedienelement gekoppelt ist.

Das Bedienelement kann z. B. als ein Drehknauf ausgeführt und ausgebildet sein, um von einem Fahrer des Fahrzeugs bedient zu werden. So kann der Fahrer das Bedienelement in zwei entgegengesetzten Drehrichtungen in eine Parkposition "P", eine Fahrposition "D", eine Rückwärtsfahrposition "R", eine Leerlaufposition "N" etc. drehen, um am Automatikgetriebe des Fahrzeugs die entsprechenden Gänge einzustellen. Das Bedienelement kann so mit der Vorrichtung gekoppelt sein, dass eine Stellung bzw. Position des Stellrings eine direkte Auswirkung auf eine Drehbarkeit des Bedienelements hat. Insbesondere kann so erreicht werden, dass bei fehlender Aktivierung einer Bremse des Fahrzeugs durch den Fahrer des Fahrzeugs über den Stellring eine Sperrung des Bedienelements realisiert werden kann, wenn das Bedienelement sich z. B. in der Position "P" oder "N" befindet. Mit einer Aktivierung der Bremse durch den Fahrer kann der Stellring eine Entsperrung des Bedienelements bewirken, und der Fahrer kann das Bedienelement z. B. aus der Position "P" in die Position "D" drehen bzw. verstellen. Beispielsweise kann das Bedienelement auf die Vorrichtung aufgesteckt sein und/oder durch eine formschlüssige, kraftschlüssige oder stoffschlüssige Verbindung mit dem Rastierkamm oder einer anderen Verbindungseinrichtung der Vorrichtung verbunden sein.

Ein Verfahren zum Betreiben einer Vorrichtung zum Sperren eines Bedienelements eines Automatikgetriebes eines Fahrzeugs, wobei die Vorrichtung einen direkt mit dem Bedienelement koppoelbaren oder gekoppelten drehbar gelagerten Rastierkamm mit einer Sperrkontur, wobei der Rastierkamm eine durch eine Mehrzahl von kammartig angeordneten Erhebungen gekennzeichnete Rastierkontur aufweist, ein Sperrelement, das ausgebildet ist, um in einer ersten Position außerhalb der Sperrkontur angeordnet zu sein, um zum Zulassen einer Verstellbewegung des Bedienelements den Rastierkamm für eine Drehbewegung freizugeben, und in einer zweiten Position in der Sperrkontur angeordnet zu sein, um zum Sperren des Bedienelements den Rastierkamm zu fixieren, und einen drehbar gelagerten Stellring mit einer Steuerkontur zum Führen des Sperrelements zwischen der ersten Position und der zweiten Position aufweist, umfasst einen Schritt des Drehens des Stellrings, um mittels der Steuerkontur das Sperrelement aus der ersten Position in die zweite Position zu bewegen, um den Rastierkamm zum Sperren des Bedienelements zu fixieren.

Gemäß einer Ausführungsform umfasst das Verfahren ferner einen Schritt des Zurückdrehens des Stellrings, um mittels der Steuerkontur das Sperrelement aus der zweiten Position in die erste Position zu bewegen, um den Rastierkamm zum Zulassen einer Verstellbewegung des Bedienelements für eine Drehbewegung freizugeben.

Die Schritte des Drehens und des Zurückdrehens können je eine Drehbewegung des Stellrings ein einander entgegengesetzte Drehrichtungen bewirken.

Das Verfahren kann vorteilhaft unter Verwendung der genannten Vorrichtung umgesetzt werden.

Die Erfindung wird anhand der beigefügten Zeichnungen beispielhaft näher erläutert. Es zeigen:
- Fig. 1: eine schematische Darstellung einer Schaltvorrichtung zum Schalten eines Automatikgetriebes eines Fahrzeugs, gemäß einem Ausführungsbeispiel der vorliegenden Erfindung;
- Fig. 2: eine perspektivische Explosionsdarstellung der Schaltvorrichtung aus Fig. 1, gemäß einem Ausführungsbeispiel der vorliegenden Erfindung;
- Fig. 3A: eine perspektivische Ansicht der Schaltvorrichtung aus Fig. 2 mit entkoppeltem Rastierstift und entsperrtem Bedienelement, gemäß einem Ausführungsbeispiel der vorliegenden Erfindung;
- Fig. 3B: eine perspektivische Ansicht der Schaltvorrichtung aus Fig. 2 mit eingekoppeltem Rastierstift und entsperrtem Bedienelement, gemäß einem Ausführungsbeispiel der vorliegenden Erfindung;
- Fig. 3C: eine perspektivische Ansicht der Schaltvorrichtung aus Fig. 2 mit eingekoppeltem Rastierstift und gesperrtem Bedienelement, gemäß einem Ausführungsbeispiel der vorliegenden Erfindung;
- Fig. 4: eine perspektivische Detailansicht der Schaltvorrichtung aus Fig. 2 mit entsperrtem Bedienelement, gemäß einem Ausführungsbeispiel der vorliegenden Erfindung;
- Fig. 5: eine perspektivische Detailansicht der Schaltvorrichtung aus Fig. 2 mit gesperrtem Bedienelement, gemäß einem Ausführungsbeispiel der vorliegenden Erfindung; und
- Fig. 6: ein Ablaufdiagramm eines Verfahrens zum Betreiben einer Vorrichtung zum Sperren eines Bedienelements eines Automatikgetriebes eines Fahrzeugs, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

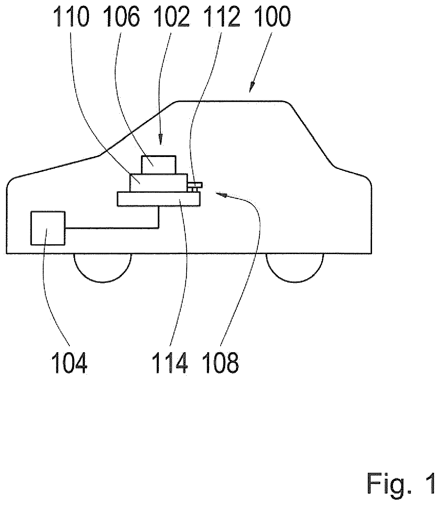

Fig. 1 zeigt anhand einer schematischen Darstellung ein Fahrzeug 100 mit einer Schaltvorrichtung 102 gemäß einem Ausführungsbeispiel der vorliegenden Erfindung. Die Schaltvorrichtung 102 ist zum Schalten eines Automatikgetriebes 104 des Fahrzeugs 100 ausgebildet und setzt sich aus einem Bedienelement 106 und einer Vorrichtung 108 zum Sperren des Bedienelements 106 zusammen. Die Vorrichtung 108 ist mit dem Bedienelement 106 gekoppelt.

Über eine Betätigung des Bedienelements 106 kann der Fahrer gewünschte Schaltzustände des Automatikgetriebes 104, z. B. P für Parken, D für Fahren, R für Rückwärtsfahren und N oder 0 für eine Neutralstellung des Getriebes 104 einstellen. Über die Vorrichtung 108 kann das Bedienelement 106 für eine Bedienung durch den Fahrer gesperrt werden, z. B. wenn der Fahrer in den Getriebestellungen P und N eine Bremse des Fahrzeugs 100 nicht aktiviert hat. Sobald der Fahrer die Bremse mit dem Fuß betätigt, gibt die Vorrichtung 108 das Bedienelement 106 wieder frei und der Fahrer kann den gewünschten Gang einstellen. Eine Information über eine aktuelle Betätigung oder Nicht-Betätigung der Bremse empfängt die Schaltvorrichtung 102 beispielsweise über ein mit der Schaltvorrichtung 102 gekoppeltes Steuergerät des Fahrzeugs 100.

Dazu umfasst die Vorrichtung 108 einen direkt mit dem Bedienelement 106 gekoppelten drehbar gelagerten Rastierkamm 110 mit einer (hier nicht gezeigten) Sperrkontur, ein Sperrelement 112 sowie einen drehbar gelagerten Stellring 114 mit einer (hier ebenfalls nicht gezeigten) Steuerkontur zum Führen des Sperrelements 112 zwischen einer ersten und einer zweiten Position. Das Sperrelement 112 ist ausgebildet, um in der ersten Position außerhalb des Rastierkamms 110 angeordnet zu sein und in der zweiten Position in der Sperrkontur des Rastierkamms 110 angeordnet zu sein, um über eine so erfolgende Fixierung des Rastierkamms 110 das Bedienelement 106 zu sperren.

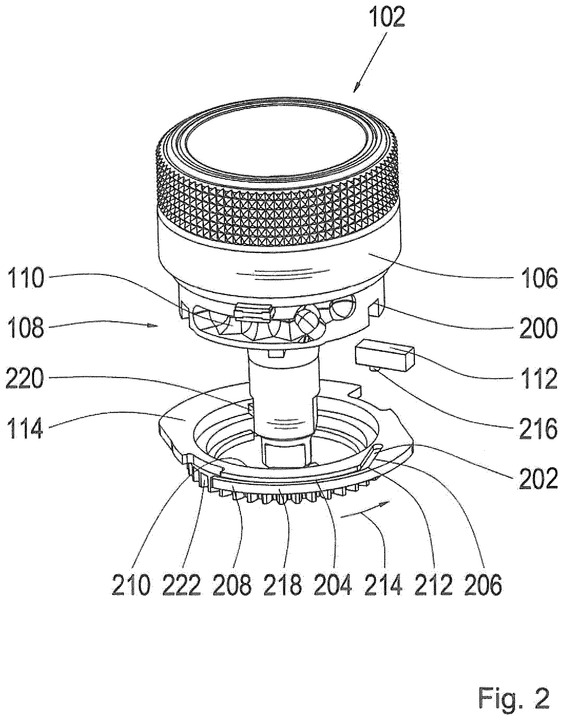

Fig. 2 zeigt ein Ausführungsbeispiel der Schaltvorrichtung 102 aus Fig. 1 in einer detailgetreueren Darstellung. Zur besseren Veranschaulichung ist die Schaltvorrichtung 102 in Fig. 2 auseinandergezogen dargestellt. Das mit der Vorrichtung 108 gekoppelte Bedienelement 106 ist ausgebildet, um von einem Fahrer des Fahrzeugs, in dem die Schaltvorrichtung 102 installiert ist, gehandhabt zu werden, um unterschiedliche Gänge des mit der Schaltvorrichtung 102 gekoppelten Automatikgetriebes des Fahrzeugs einzustellen. Bei dem in der Darstellung in Fig. 2 gezeigten Ausführungsbeispiel der Schaltvorrichtung 102 ist das Bedienelement 106 als ein Drehknauf ausgeführt und weist entsprechend eine Zylinderform auf. Entsprechend der Ausführung als Drehknauf wird ein Schaltvorgang der Schaltvorrichtung 102 durch Drehen des Bedienelements 106 ausgeführt. Dazu weist ein Abschnitt der zylinderförmigen Wand des Bedienelements 106 zum besseren Greifen eine geriffelte Oberfläche auf. Ziel der hier vorgestellten erfindungsgemäßen Vorrichtung 108 ist es, die Shiftlockfunktion bereitzustellen, also bei nicht aktivierter Fahrzeugbremse das Bedienelement 106 zu sperren, wenn sich das Getriebe des Fahrzeugs in der Parkposition oder im Leerlauf befindet, und die Sperrung mit Aktivierung der Fahrzeugbremse aufzuheben. Gemäß Ausführungsbeispielen kann der Schalthebel bzw. das Bedienelement 106 außer in den Schaltposition P und N auch in weiteren Positionen gesperrt werden.

Wie die Darstellung in Fig. 2 zeigt, ist der Rastierkamm 110 zwischen dem Bedienelement 106 und dem Stellring 114 angeordnet. Das Bedienelement 106, der Rastierkamm 110 sowie der Stellring 144 sind in parallelen Ebenen angeordnet. Der Rastierkamm 110 ist direkt mit dem Bedienelement 106 gekoppelt, weist eine Zylinder- oder Ringform auf und ist im Umfang geringfügig kleiner als das Bedienelement 106. Der Rastierkamm 110 ist drehbar in der Vorrichtung 108 gelagert. Eine in Fig. 2 deutliche sichtbare Rastierkonturierung des Rastierkamms 110 ermöglicht die exakte Einstellung der Gänge am Bedienelement 106.

Das Sperrelement 112 ist hier als ein länglicher Quader ausgeführt und in Bezug auf seine Längsachse radial gegenüber dem Rastierkamm 110 angeordnet und zu einer Sperrkontur 200 des Drehknaufs 106 hin ausgerichtet. Das Sperrelement 112 ist ausgebildet, um in einer ersten Position außerhalb der Sperrkontur 200 angeordnet zu sein, sodass der Rastierkamm 110 ungehindert in beide Richtungen verdreht werden kann. Das Sperrelement 112 ist ausgebildet, um in einer zweiten Position in die Sperrkontur 200 einzugreifen, um den Rastierkamm 110 zu fixieren. Das Sperrelement 200 ist gegenüber einer Drehbewegung des Rastierkamms 110 ortsfest in der Vorrichtung 108 angeordnet. D. h., es kann radial bezüglich des Rastierkamms, nicht aber entlang eines Umfangs des Rastierkamms 110 bewegt werden. Die Sperrkontur 200 wird durch eine zinnenschartenartige Ausnehmung in dem Rastierkamm 110 gebildet, die zu dem Stellring 114 sowie der Sperrkontur 112 hin ausgerichtet ist. In dieser Ausprägung ist die Sperrkontur 200 somit optimal zur Aufnahme des quaderförmigen Sperrelements 112 geeignet. Damit sich das Sperrelement 112 verkantungsfrei in die Sperrkontur 200 hinein- und wieder aus ihr hinausbewegen kann, ist die die Sperrkontur 200 bildende Ausnehmung in dem Rastierkamm 110 etwas größer als das Sperrelement 112 dimensioniert.

Die Bewegung des Sperrelements 200 zwischen der ersten Position und der zweiten Position wird mittels einer in dem Stellring 114 angeordneten Steuerkontur 202 realisiert. Der ebenfalls drehbar gelagerte Stellring 114 ist angrenzend an den Rastierkamm 110 und in einer zu der Ebene des Rastierkamms 110 parallelen Ebene angeordnet. Wie die Darstellung in Fig. 2 zeigt, wird die Steuerkontur 202 durch eine in dem Stellring verlaufende Nut gebildet. Die Nut ist aus einer zu dem Rastierkamm 110 hin ausgerichteten Oberfläche des Stellrings 114 herausgearbeitet und erstreckt sich in ihrer Tiefe bis zu einer der Oberfläche gegenüberliegenden weiteren Oberfläche bzw. Unterseite des Stellrings 114. Alternativ kann die Nut auch als Vertiefung in der Oberfläche des Stellrings ausgebildet sein, wobei die Unterseite des Stellrings 114 geschlossen bleibt. Wie die Darstellung in Fig. 2 deutlich zeigt, setzt sich die Steuerkontur-Nut 202 aus einem ersten Nutabschnitt 204 und einem zweiten Nutabschnitt 206 zusammen.

Der erste Nutabschnitt 204 ist länger als der zweite Nutabschnitt 206 und verläuft näher bei einer Außenkontur 208 als bei einer Innenkontur 210 des Stellrings 114 und im Wesentlichen parallel zu der Außenkontur 206 des Stellrings 114. Im kürzeren zweiten Nutabschnitt 206 biegt die Steuerkontur 202 ab einem Knickpunkt 212 geradlinig in Richtung der Innenkontur 210 ab. Entsprechend seines charakteristischen Verlaufs am Außenrand 208 des Stellrings 114 ist der erste Nutabschnitt 204 ausgebildet, um bei einem Drehen bzw. einer Drehbewegung 214 des Stellrings 114 das in Bezug auf die Drehbewegung 214 ortsfeste Sperrelement 112 in der ersten Position, also außerhalb der Sperrkontur 200 zu führen. Mit dem charakteristischen Verlauf in Richtung des Innenrands 210 des Stellrings 114 ist der zweite Nutabschnitt 206 geeignet, das Sperrelement 112 beim Drehen 214 des Stellrings 114 in Richtung eines Zentrums des Rastierkamms 110 und damit in die dem Sperrelement 112 gegenüber angeordnete Sperrkontur 200 hineinzuführen, um die zweite Position des Sperrelements 112 herzustellen und damit den Rastierkamm 112 zu fixieren. Die Drehbewegung 214 und ihre Richtung ist in der Darstellung in Fig. 2 mittels eines Richtungspfeils gekennzeichnet.

Zum geeigneten und sicheren Führen des Sperrelements 112 zwischen der ersten und der zweiten Position weist das Sperrelement 112 einen Fortsatz 216 auf, der an einer dem Stellring 114 mit der der Steuerkontur 202 zugewandten Seite des Sperrelements 112 angeordnet ist. Der Fortsatz 216 ist hier einstückig mit dem Sperrelement gebildet und geeignet, um von der Steuerkontur 202 beispielsweise durch Formschluss in Eingriff genommen zu sein.

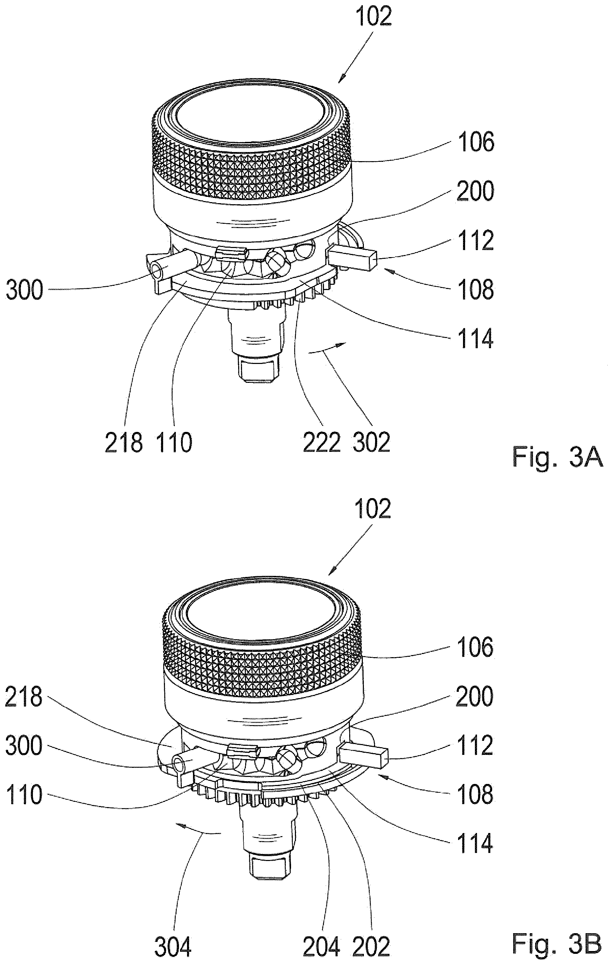

Wie die Darstellung in Fig. 2 zeigt, ist die Steuerkontur 202 in einem Bereich des Stellrings 114 angeordnet, der einen als gerundeten Vorsprung ausgeformten Steuernocken 218 des Stellrings 114 bildet. Auf die Funktion des Steuernockens 218 und einer an der Innenkontur 210 des Stellrings 114 ausgeformten Nase 220 wird im Zusammenhang mit der AutoP-Funktion anhand der nachfolgenden Figuren 3A bis 3C eingegangen.

Wie die Darstellung in Fig. 2 zeigt, weist die Vorrichtung 108 an ihrem unteren Ende ein Koppelelement 222 auf, das ausgebildet ist, um ein Drehmoment eines Aktors zum Bewegen des Bedienelements 106 auf den Stellring 114 zu übertragen, um die Drehbewegung 214 des Stellrings 114 zu erzeugen. Das Koppelelement 222 ist hier als ein Zahnrad ausgebildet, das mit einer Hauptseite fest an dem Stellring 114 angeordnet ist. An einer der Hauptseite gegenüberliegenden freien Hauptseite kann das Koppelelement 222 z. B. mit einem Elektromotor verbunden sein, dessen Drehmoment über das Koppelelement 222 auf den Stellring 114 und damit letztendlich das Bedienelement 106 übertragen wird.

Anhand der nachfolgenden Figuren 3A bis 3C soll eine vorteilhafte Funktionsintegration des Hauptmerkmals dieser Erfindung, der Shiftlockfunktion, mit der AutoP-Funktion anschaulich erläutert werden.

Fig. 3A zeigt eine perspektivische Ansicht eines Ausführungsbeispiels der Schaltvorrichtung 102 aus Fig. 2. Bei dem in der Darstellung gezeigten Ausführungsbeispiel der Schaltvorrichtung 102 sind beide Funktionen AutoP und Shiftlock integriert.

Wie bereits angedeutet, wird bei AutoP eine Stellung eines Schaltknaufs für ein Automatikgetriebe eines Fahrzeugs mit einer automatischen Parksperre des Automatikgetriebes in Einklang gebracht, indem der Schalthebel mittels eines Aktors aus einer der Positionen D, R oder N etc. indirekt in die Position P zurückgedreht wird. Dazu ist die erfindungsgemäße Schaltvorrichtung 102 neben den bereits vorgestellten Elementen zusätzlich insbesondere mit einem federbelasteten Rastierstift 300 ausgestattet.

Wie die Darstellung in Fig. 3A zeigt, ist der federbelastete Rastierstift 300 radial gegenüber dem Rastierkamm 110 angeordnet und durchgreift den Rastierkamm 110 an zwei diametral gegenüberliegenden Positionen. Der Rastierstift 300 ist ortsfest im Gehäuse der Schaltvorrichtung 102 angeordnet und ausgebildet, um in einer ersten Position in eine Rastierkontur des Rastierkamms 110 einzugreifen, um diesen in der Rasterkontur zu fixieren. In dieser Stellung kann der Rastierkamm 110 nur über den Rastierstift 300, also schwergängiger, bewegt werden. In einer zweiten Position ist der Rastierstift 300 aus der Rastierkontur herausbewegt, um den Rastierkamm 110 für eine leichtgängige freilaufende Drehbewegung freizugeben.

Der Rastierstift 300 ist mit einem in der Darstellung in Fig. 3A nicht gezeigten Federelement der Vorrichtung 108 verbunden, das ausgebildet ist, um mittels Federkraft den Rastierstift 112 in der ersten Position zu halten oder in diese zu bewegen. Der bereits erwähnte Steuernocken 218 ist durch eine größere radiale Ausdehnung des Stellrings 114 als in einem Restbereich des Stellrings 114 ausgeformt und ausgebildet, um ansprechend auf eine Drehung des Stellrings 114 den Rastierstift 300 entgegen der Federkraft aus der ersten Position in die zweite Position zu bewegen. Bei dem in Fig. 3A gezeigten Funktionszustand hat eine mittels eines Richtungspfeils gekennzeichnete Drehung 302 des Stellrings 114 zum Entkoppeln des Rastierstifts 300 und des Rastierkamms 110 stattgefunden. Die Zustandsdarstellung der Rückstellposition in Fig. 3A zeigt, dass der Steuernocken 218 in der Drehung des Stellrings 114 den Rastierstift 300 über einen Fortsatz des Rastierstifts 300 aufgenommen und in die zweite Position bewegt hat, in der der Rastierkamm 110 für eine Drehung freigegeben ist.

Gemäß der AutoP-Funktion wird in der in Fig. 3A gezeigten Rückstellposition nun über die versetzt zum dem Steuernocken 218 innen am Stellring 114 angeordnete Nase (hier nicht gezeigt) ein (hier ebenfalls nicht gezeigtes) Anschlagelement des Rastierkamms 110 in der Drehung mitgenommen. Der Schalthebel bzw. Drehknauf 106, der drehbar gelagert und direkt mit einer Rastierung verbunden ist, wird also bei AutoP einschließlich der Rastierung 110 indirekt mittels eines über das Koppelelement 222 mit dem Stellring 114 verbundenen Elektromotors zurückgedreht und so mit der Parksperre des Getriebes in Übereinstimmung gebracht.

Damit in der AutoP-Funktion in der Drehung 302 des Stellrings 114 der Rastierkamm 110 mitgenommen werden kann, ist der Sperrstift bzw. das Sperrelement 112 in dem in Fig. 3A gezeigten Funktionszustand nicht aktiv, d. h., befindet sich außerhalb der Sperrkontur 200.

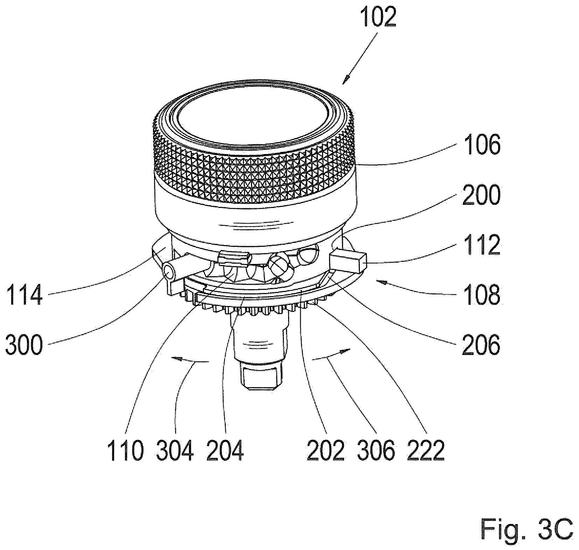

Anhand der nachfolgenden Figuren 3B und 3C soll auf die Shiftlockfunktion der Schaltvorrichtung 102 genauer eingegangen werden.

In Fig. 3B ist anhand einer weiteren perspektivischen Ansicht eine Mittelposition der Schaltvorrichtung 102 aus Fig. 3A dargestellt. Es hat hier ein erster Abschnitt einer mittels eines Richtungspfeils gekennzeichnete Drehung 304 des Stellrings 114 in einer zu der in Fig. 3A gezeigten entgegengesetzten Richtung stattgefunden.

Wie die Darstellung in Fig. 3B zeigt, hat der Steuernocken 218 den Rastierstift 300 freigegeben, der mittels Federkraft wieder eingekoppelt wurde und den Rastierkamm 110 fixiert. Das Sperrelement 112 wird in diesem ersten Abschnitt der Drehung 304 im ersten Nutabschnitt 204 der Steuerkontur 202 geführt. Entsprechend befindet sich das Sperrelement 112 in der ersten Position, also außerhalb der Sperrkontur 200 und ist damit nicht aktiv. In dem in Fig. 3B gezeigten Schaltzustand der Shiftlockfunktion befindet sich die Schaltvorrichtung 102, wenn weder P noch N am Schaltknauf 106 eingestellt ist oder die Fahrzeugbremse aktiviert ist, während der Schaltknauf 106 auf P oder N gestellt ist. In diesem Zustand ist der Shiftlock deaktiviert und der Fahrer kann das Bedienelement 106 betätigen.

Fig. 3C zeigt anhand einer weiteren perspektivischen Ansicht ein Zustandsbild einer Sperrposition der Shiftlockfunktion der Schaltvorrichtung 102 am Ende der Drehung 304. Das Sperrelement 112 wird hier im zweiten Nutabschnitt 206 der Steuerkontur 202 geführt. Entsprechend befindet sich das Sperrelement 112 in der zweiten Position und greift in die Sperrkontur 200 ein. Damit ist das Sperrelement 112 aktiv und fixiert den Rastierkamm 110. In dem in Fig. 3C gezeigten Schaltzustand der Schaltvorrichtung 102 ist der Shiftlock aktiviert; das Bedienelement 106 kann nicht in eine andere Position bewegt werden, beispielsweise, weil das Getriebe in der Park- oder Neutralposition ist und die Fahrzeugbremse nicht aktiv ist. Der Rastierstift 300 ist nach wie vor eingekoppelt.

Betätigt der Fahrer aus dem in Fig. 3C gezeigten Zustand der Schaltvorrichtung 102 heraus die Fahrzeugbremse, bewirkt der über das Koppelelement 222 mit dem Stellring 114 verbundene (nicht gezeigte) Aktor ein mittels eines Richtungspfeils in der Darstellung gekennzeichnetes Zurückdrehen 306 des Stellrings 114, bis die Führung des Sperrelements 112 wieder vom ersten Nutabschnitt 204 übernommen wird. Entsprechend bewegt sich das Sperrelement 112 wieder aus der Sperrkontur 200 heraus und gibt den Rastierkamm 110 für eine Drehbewegung frei. Der Fahrer kann das Bedienelement 106 jetzt bedienen und den gewünschten Gang einstellen.

Die anhand der Figuren 3A bis 3C illustrierte Funktionsintegration ermöglicht eine Schaltbetätigung mit einer Shiftlockfunktion ohne Erfordernis eines zusätzlichen Aktors. Hierfür wird der in der AutoP-Funktion bereits vorhandene Rückstellring 114 mit der zusätzlichen Steuerkontur 202 versehen. Durch diese Steuerkontur 202 wird das Sperrelement 112, das ortsfest im Gehäuse der Schaltvorrichtung 102 angeordnet ist, bewegt. Somit wird der Schalthebel 106 in den Positionen P und N verriegelt bzw. entriegelt. Der vorhandene Aktor übernimmt hierbei die Verdrehung des Rückstellringes 114.

Zusammenfassend sei nochmals der anhand der Figuren 3A bis 3C gezeigte Funktionsablauf der Shiftlockfunktion in P und N erläutert. Bei AutoP erfolgt zuerst die Entkoppelung von Rastierstift 300 und Rastierung 110. Beim Weiterdrehen 302 des Rückstellringes 114 wird dann die Rastierung 110 am Koppelpunkt mitgenommen und nach P zurückgedreht. Nachdem der Schalthebel 106 die P-Position erreicht hat, wird der Rückstellring 114 in einer entgegengesetzten Drehung 304 in seine Ausgangsstellung zurückgeführt. Hierbei wird der Rastierstift 300 wieder mit der Rastierung 110 in Eingriff gebracht.

Bei der Anforderung "Shiftlock einlegen" wird der Rückstellring 114 in der Drehrichtung 304 entgegen der AutoP-Richtung noch weitergedreht, sodass über die Steuerkontur 202 das Sperrelement 112 bewegt wird. Somit wird der Schalthebel bzw. Drehknauf 106 gesperrt.

Bei der Anforderung "Shiftlock auslegen" wird der Rückstellring 114 in der Drehung 306 in die Ausgangsstellung zurückgedreht. Durch die Steuerkontur 202 bewegt sich das Sperrelement 112 und entriegelt somit den Schalthebel 106.

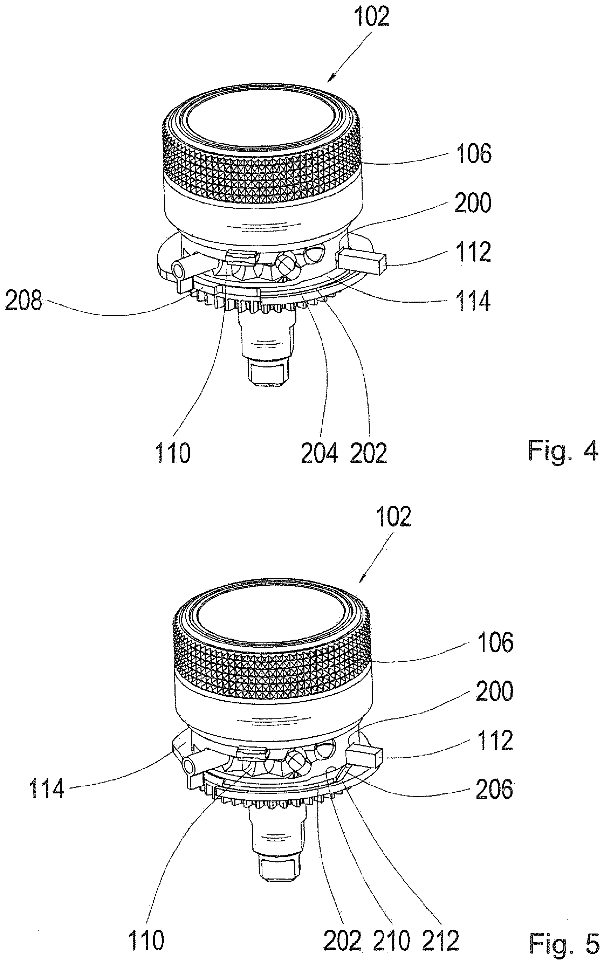

Figuren 4 und 5 zeigen detaillierte Ansichten der erfindungsgemäßen Drehschaltung 102 mit entkoppelter Rastierung 110 sowie Shiftlockfunktion mittels Sperrelement 112.

Fig. 4 zeigt anhand einer perspektivischen Detailansicht die Schaltvorrichtung 102 mit entriegeltem Bedienelement 106, gemäß einem Ausführungsbeispiel der vorliegenden Erfindung. Im in Fig. 4 gezeigten Schaltzustand wird das ortsfeste Sperrelement 112 im ersten Nutabschnitt 204 der Steuerkontur 202 geführt. Der erste Nutabschnitt 204 verläuft nahe an der Außenkontur 208 des Stellrings 114 und hält das Sperrelement 112 damit auf Abstand vom Rastierkamm 110. Somit befindet sich das Sperrelement 112 in der ersten Position und greift nicht in die Sperrkontur 200 des Rastierkamms 110 ein. Das Bedienelement 106 ist entriegelt und kann verstellt werden.

Fig. 5 zeigt anhand einer weiteren perspektivischen Detailansicht die Schaltvorrichtung 102 mit verriegeltem Bedienelement 106, gemäß einem Ausführungsbeispiel der vorliegenden Erfindung. Im in Fig. 5 gezeigten Schaltzustand wird das ortsfeste Sperrelement 112 im zweiten Nutabschnitt 206 der Steuerkontur 202 geführt. Der zweite Nutabschnitt 206 ist durch ein Abknicken der Steuerkontur 202 am Knickpunkt 212 in Richtung der Innenkontur 210 des Stellrings 114 charakterisiert. Entsprechend seines Verlaufs zieht der zweite Nutabschnitt 206 das Sperrelement 112 in Richtung des Zentrums des ringförmigen Rastierkamms 110. Im in Fig. 5 gezeigten Funktionszustand der Shiftlockfunktion der Schaltvorrichtung 102 befindet sich das Sperrelement 112 in der zweiten Position, greift in die Sperrkontur 200 des Rastierkamms 110 ein und fixiert diesen. Das Bedienelement 106 ist verriegelt und kann nicht verstellt werden.

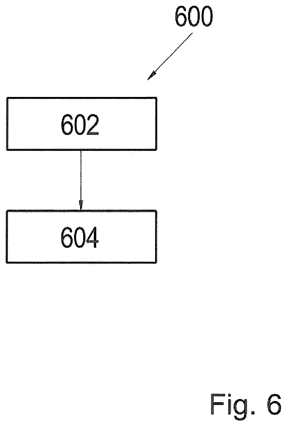

Fig. 6 zeigt ein Ablaufdiagramm eines Ausführungsbeispiels eines Verfahrens 600 zum Betreiben einer Vorrichtung zum Sperren eines Bedienelements eines Automatikgetriebes eines Fahrzeugs.

Bei der mittels des Verfahrens 600 zu betreibenden Vorrichtung kann es sich um die anhand der vorangegangenen Figuren erläuterte Vorrichtung handeln, die mit einem Bedienelement einer Automatikschaltung eines Fahrzeugs gekoppelt bzw. koppelbar ist und sich aus einem drehbar gelagerten Rastierkamm mit einer Sperrkontur, einem Sperrelement zum Ver- bzw. Entriegeln des Bedienelements und einem drehbar gelagerten Stellring mit einer Steuerkontur zum Führen des Sperrelements zusammensetzt.

Das Verfahren kann von einem mit der Vorrichtung gekoppelten Steuergerät des Fahrzeugs ausgeführt werden.

In einem Schritt 602 wird der Stellring über einen mit der Vorrichtung gekoppelten Aktor in einer vorbestimmten ersten Drehrichtung gedreht, um mittels der Steuerkontur das Sperrelement aus einer ersten Position in eine zweite Position zu bewegen und so den Rastierkamm zu fixieren und das Bedienelement zu verriegeln. Das Bedienelement kann nun nicht mehr durch einen Bediener bewegt werden. In einem Schritt 604 wird der Stellring in einer zu der ersten Drehrichtung entgegengesetzten zweiten Drehrichtung gedreht, um mittels der Steuerkontur das Sperrelement aus der zweiten Position zurück in die erste Position zu bewegen und so den Rastierkamm für eine Drehbewegung des mit dem Rastierkamm gekoppelten Bedienelements freizugeben. Das Bedienelement ist damit entsperrt und kann durch einen Bediener bewegt werden.

Durch die Schritte 602, 604 können die Anorderungen "Schiftlock einlegen" und "Shiftlock auslegen" umgesetzt werden.

In weiteren optionalen Schritten, die beispielsweise vor den Schritten 602, 604 ausgeführt werden können, kann eine AutoP-Funktionalität umgesetzt werden. Dazu kann kann der Stellring zunächst in der zweiten Drehrichtung gedreht werden, um einen Eingriff eines Rastierstifts in den Rastierkamms aufzuheben und anschließend den Rastierkamm, ohne die Rasterung des Rastierkamms überwinden zu müssen, so weit zu drehen, dass das Bedienelement in die Parkposition gebracht wird. Anschließend kann der Stellring in der ersten Drehrichtung gedreht werden, um den Rastiersift wieder in Eingriff mit dem Rastierkamm zu bringen. Der Fahrer kann das Bedienelement nun wieder, über die Rasterung des Rastierkamms hinweg, betätigen. Zum Einlegen des Schiflocks kann nun der Schritt 602 ausgeführt werden.

Auch wenn in den Figuren das Bedienelement bereits mit der Vorrichtung zum Sperren des Bedienelements gekoppelt dargestellt ist, so kann die Vorrichtung zum Sperren des Bedienelements auch ohne das Bedienelement bereitgestellt werden. Das Bedienelement kann dann beispielsweise zu einem späteren Zeitpunkt an die Vorrichtung montiert werden.

Ist ein beschriebenes Element ausgebildet, um eine Funktionalität zu ermöglichen, so kann dies bedeuten, dass das Element geeignet ausgeformt und/oder angeordnet ist, um die Funktionalität zu ermöglichen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 102: Schaltvorrichtung
- 104: Automatikgetriebe
- 106: Bedienelement
- 108: Vorrichtung zum Sperren des Bedienelements
- 110: Rastierkamm
- 112: Sperrelement
- 114: Stellring
- 200: Sperrkontur
- 202: Steuerkontur
- 204: erster Nutabschnitt
- 206: zweiter Nutabschnitt
- 208: Außenkontur des Stellrings
- 210: Innenkontur des Stellrings
- 212: Knickpunkt
- 214: Drehbewegung
- 216: Fortsatz
- 218: Steuernocken
- 220: Nase
- 222: Koppelelement
- 300: Rastierstift
- 302: Drehung zum Entkoppeln des Rastierstifts
- 304: Drehen des Stellrings zum Sperren des Bedienelements
- 306: Zurückdrehen des Stellrings zum Entsperren des Bedienelements
- 600: Verfahren zum Betreiben einer Vorrichtung zum Sperren eines Bedienelements
- 602: Schritt des Drehens des Stellrings
- 604: Schritt des Zurückdrehens des Stellrings

## Patentansprüche

1. Vorrichtung (108) zum Sperren eines Bedienelements (106) eines Automatikgetriebes (104) eines Fahrzeugs (100), wobei die Vorrichtung (108) die folgenden Merkmale aufweist:
einen direkt mit dem Bedienelement (106) koppelbaren drehbar gelagerten Rastierkamm (110) mit einer Sperrkontur (200), wobei der Rastierkamm (110) eine durch eine Mehrzahl von kammartig angeordneten Erhebungen gekennzeichnete umlaufende Rastierkontur aufweist; und
ein Sperrelement (112), das ausgebildet ist, um in einer ersten Position außerhalb der Sperrkontur (200) angeordnet zu sein, um zum Zulassen einer Verstellbewegung des Bedienelements (106) den Rastierkamm (110) für eine Drehbewegung freizugeben, und in einer zweiten Position in der Sperrkontur (200) angeordnet zu sein, um zum Sperren des Bedienelements (106) den Rastierkamm (110) zu fixieren;
**dadurch gekennzeichnet, dass** die Vorrichtung (108) die folgenden Merkmale aufweist:
einen drehbar gelagerten Stellring (114) mit einer Steuerkontur (202) zum Führen des Sperrelements (112) zwischen der ersten Position und der zweiten Position.

2. Vorrichtung (108) gemäß Anspruch 1, **dadurch gekennzeichnet, dass** die Sperrkontur (200) durch eine Ausnehmung in dem Rastierkamm (110) gebildet ist, wobei eine Kontur der Ausnehmung einer Kontur des Sperrelements (112) entspricht.

3. Vorrichtung (108) gemäß einem der vorangegangenen Ansprüche, **dadurch gekennzeichnet, dass** die Steuerkontur (202) durch eine in dem Stellring (114) verlaufende Nut gebildet wird, wobei die Nut in einem ersten Nutabschnitt (204) näher bei einer Außenkontur (208) als bei einer Innenkontur (210) des Stellrings (114) verläuft und sich in einem zweiten Nutabschnitt (206) der Innenkontur (210) des Stellrings (114) annähert, wobei der erste Nutabschnitt (204) ausgeformt ist, um das Sperrelement (112) in der ersten Position zu führen und der zweite Nutabschnitt (206) ausgebildet ist, um das Sperrelement (112) aus der ersten Position in die zweite Position zu führen.

4. Vorrichtung (108) gemäß einem der vorangegangenen Ansprüche, **dadurch gekennzeichnet, dass** das Sperrelement (112) an einer der Steuerkontur (202) zugewandten Seite einen Fortsatz (216) aufweist, der ausgebildet ist, um zum Führen des Sperrelements (112) mit der Steuerkontur (202) im Eingriff zu sein.

5. Vorrichtung (108) gemäß einem der vorangegangenen Ansprüche, **dadurch gekennzeichnet, dass** der Rastierkamm (110) zwischen dem Stellring (114) und dem Bedienelement (106) angeordnet ist und das Sperrelement (112) radial bezüglich des Rastierkamms (110) und des Stellrings (114) angeordnet ist und ausgebildet ist, um in radialer Richtung bezüglich des Rastierkamms (110) und des Stellrings (114) zwischen der ersten Position und der zweiten Position bewegt zu werden.

6. Vorrichtung (108) gemäß einem der vorangegangenen Ansprüche, **dadurch gekennzeichnet, dass** die Vorrichtung (108) ferner einen Rastierstift (300) aufweist, der ausgebildet ist, um in einer ersten Position in eine Rastkontur des Rastierkamms (110) einzugreifen und in einer zweiten Position den Rastierkamm (110) für eine Drehbewegung freizugeben, wobei der Rastierkamm (110) ferner ein Anschlagelement aufweist und der drehbar gelagerte Stellring (114) ferner einen Steuernocken (218) und eine Nase (220) aufweist, wobei der Steuernocken (218) ausgeformt ist, um bei einer Drehbewegung des Stellrings (114) den Rastierstift (300) aus der ersten Position in die zweite Position zu bewegen, und die Nase (220) ausgeformt ist, um bei der Drehbewegung des Stellrings (114) das Anschlagelement mitzunehmen, um den Rastierkamm (110) zum Verstellen des Bedienelements (106) in eine Parkposition zu drehen.

7. Vorrichtung (108) gemäß Anspruch 6, **dadurch gekennzeichnet, dass** die Steuerkontur (202) im Bereich des Steuernockens (218) in dem Stellring (114) verläuft.

8. Vorrichtung (108) gemäß einem der vorangegangenen Ansprüche, **dadurch gekennzeichnet, dass** die Vorrichtung (108) ferner ein den Stellring (114) mit einem Aktor koppelndes Koppelelement (222) aufweist, das ausgebildet ist, um ein Drehmoment des Aktors auf den Stellring (114) zu übertragen, um die Drehbewegung des Stellrings (114) zu erzeugen.

9. Schaltvorrichtung (102) zum Schalten eines Automatikgetriebes (104) eines Fahrzeugs (100), wobei die Schaltvorrichtung (102) die folgenden Merkmale aufweist:
ein Bedienelement (106), das ausgebildet ist, um zwischen einer Parkposition oder einer Leerlaufposition des Automatikgetriebes (104) und zumindest einer Fahrposition des Automatikgetriebes (104) verstellt zu werden; und
eine Vorrichtung (108) zum Sperren eines Bedienelements (106) gemäß einem der vorangegangenen Ansprüche, wobei der Rastierkamm (110) der Vorrichtung (108) direkt mit dem Bedienelement (106) gekoppelt ist.

10. Verfahren (600) zum Betreiben einer Vorrichtung (108) zum Sperren eines Bedienelements (106) eines Automatikgetriebes (104) eines Fahrzeugs (100), wobei die Vorrichtung (108) einen direkt mit dem Bedienelement (106) koppelbaren drehbar gelagerten Rastierkamm (110) mit einer Sperrkontur (200), wobei der Rastierkamm eine durch eine Mehrzahl von kammartig angeordneten Erhebungen gekennzeichnete umlaufende Rastierkontur aufweist, ein Sperrelement (112), das ausgebildet ist, um in einer ersten Position außerhalb der Sperrkontur (200) angeordnet zu sein, um zum Zulassen einer Verstellbewegung des Bedienelements (106) den Rastierkamm (110) für eine Drehbewegung freizugeben, und in einer zweiten Position in der Sperrkontur (200) angeordnet zu sein, um zum Sperren des Bedienelements (106) den Rastierkamm (110) zu fixieren, und einen drehbar gelagerten Stellring (114) mit einer Steuerkontur (202) zum Führen des Sperrelements (112) zwischen der ersten Position und der zweiten Position aufweist, **dadurch gekennzeichnet, dass** das Verfahren (600) den folgenden Schritt aufweist:
Drehen (602) des Stellrings (114), um mittels der Steuerkontur (202) das Sperrelement (112) aus der ersten Position in die zweite Position zu bewegen, um den Rastierkamm (110) zum Sperren des Bedienelements (106) zu fixieren.

11. Verfahren (600) gemäß Anspruch 10, **dadurch gekennzeichnet, dass** das Verfahren (600) einen Schritt des Zurückdrehens (604) des Stellrings (114) aufweist, um mittels der Steuerkontur (202) das Sperrelement (112) aus der zweiten Position in die erste Position zu bewegen, um den Rastierkamm (110) zum Zulassen einer Verstellbewegung des Bedienelements (106) für eine Drehbewegung freizugeben.

## Claims

1. Apparatus (108) for locking an operating element (106) of an automatic transmission (104) of a vehicle (100), the apparatus (108) having the following features:
a latching crown (110) with a locking contour (200), the latching crown (110) being mounted rotatably, being directly couplable to the operating element (106) and having a circumferential latching contour which is **characterized by** a plurality of elevations which are arranged in a crown-like manner; and
a locking element (112) which is configured to be arranged outside the locking contour (200) in a first position, in order to release the latching crown (110) for a rotational movement for permitting an adjusting movement of the operating element (106), and to be arranged in the locking contour (200) in a second position, in order to fix the latching crown (110) for locking the operating element (106);
**characterized in that** the apparatus (108) has the following features:
a rotatably mounted adjusting ring (114) with a control contour (202) for guiding the locking element (112) between the first position and the second position.

2. Apparatus (108) according to Claim 1, **characterized in that** the locking contour (200) is formed by way of a recess in the latching crown (110), a contour of the recess corresponding to a contour of the locking element (112).

3. Apparatus (108) according to either of the preceding claims, **characterized in that** the control contour (202) is formed by way of a groove which runs in the adjusting ring (114), the groove in a first groove section (204) running closer to an outer contour (208) than to an inner contour (210) of the adjusting ring (114) and, in a second groove section (206), approaching the inner contour (210) of the adjusting ring (114), the first groove section (204) being formed for guiding the locking element (112) in the first position, and the second groove section (206) being configured for guiding the locking element (112) out of the first position into the second position.

4. Apparatus (108) according to one of the preceding claims, **characterized in that** the locking element (112) has a projection (216) on a side which faces the control contour (202), which projection (216) is configured for being in engagement with the control contour (202) in order to guide the locking element (112).

5. Apparatus (108) according to one of the preceding claims, **characterized in that** the latching crown (110) is arranged between the adjusting ring (114) and the operating element (106), and the locking element (112) is arranged radially with regard to the latching crown (110) and the adjusting ring (114) and is configured for being moved between the first position and the second position in the radial direction with regard to the latching crown (110) and the adjusting ring (114).

6. Apparatus (108) according to one of the preceding claims, **characterized in that**, furthermore, the apparatus (108) has a latching pin (300) which is configured for engaging into a latching contour of the latching crown (110) in a first position and for releasing the latching crown (110) for a rotational movement in a second position, the latching crown (110) having, furthermore, a stop element, and the rotatably mounted adjusting ring (114) having, furthermore, a control cam (218) and a lug (220), the control cam (218) being formed for moving the latching pin (300) out of the first position into the second position during a rotational movement of the adjusting ring (114), and the lug (220) being formed for driving the stop element during the rotational movement of the adjusting ring (114), in order to rotate the latching crown (110) for adjusting the operating element (106) into a parked position.

7. Apparatus (108) according to Claim 6, **characterized in that** the control contour (202) runs in the adjusting ring (114) in the region of the control cam (218).

8. Apparatus (108) according to one of the preceding claims, **characterized in that**, furthermore, the apparatus (108) has a coupling element (222) which couples the adjusting ring (114) to an actuator and is configured for transmitting a torque of the actuator to the adjusting ring (114), in order to produce the rotational movement of the adjusting ring (114).

9. Shifting apparatus (102) for shifting an automatic transmission (104) of a vehicle (100), the shifting apparatus (102) having the following features:
an operating element (106) which is configured for being adjusted between a parked position or an idling position of the automatic transmission (104) and at least one driving position of the automatic transmission (104); and
an apparatus (108) for locking an operating element (106) according to one of the preceding claims, the latching crown (110) of the apparatus (108) being coupled directly to the operating element (106).

10. Method (600) for operating an apparatus (108) for locking an operating element (106) of an automatic transmission (104) of a vehicle (100), the apparatus (108) having: a latching crown (110) which is mounted rotatably, can be coupled directly to the operating element (106) and has a locking contour (200), the latching crown having a circumferential latching contour which is **characterized by** a plurality of elevations which are arranged in a crown-like manner; a locking element (112) which is configured to be arranged outside the locking contour (200) in a first position, in order to release the latching crown (110) for a rotational movement for permitting an adjusting movement of the operating element (106), and to be arranged in the locking contour (200) in a second position, in order to fix the latching crown (110) for locking the operating element (106); and a rotatably mounted adjusting ring (114) with a control contour (202) for guiding the locking element (112) between the first position and the second position, **characterized in that** the method (600) has the following step:
rotation (602) of the adjusting ring (114), in order to move the locking element (112) out of the first position into the second position by means of the control contour (202), in order to fix the latching crown (110) for locking the operating element (106).

11. Method (600) according to Claim 10, **characterized in that** the method (600) has a step of reverse rotation (604) of the adjusting ring (114), in order to move the locking element (112) out of the second position into the first position by means of the control contour (202), in order to release the latching crown (110) for a rotational movement for permitting an adjusting movement of the operating element (106).

## Revendications

1. Dispositif (108) pour verrouiller un élément d'actionnement (106) d'une boîte de vitesses automatique (104) d'un véhicule (100), le dispositif (108) présentant les caractéristiques suivantes :
un peigne d'encliquetage (110) supporté à rotation de manière à pouvoir être accouplé directement à l'élément d'actionnement (106), avec un contour de verrouillage (200), le peigne d'encliquetage (110) présentant un contour d'encliquetage périphérique **caractérisé par** une pluralité de rehaussements disposés en forme de peigne ; et
un élément de verrouillage (112), qui est réalisé de manière à être disposé dans une première position à l'extérieur du contour de verrouillage (200), afin de libérer le peigne d'encliquetage (110) en vue d'un mouvement de rotation pour autoriser un déplacement de réglage de l'élément d'actionnement (106), et de manière à être disposé dans une deuxième position dans le contour de verrouillage (200) afin de fixer le peigne d'encliquetage (110) pour verrouiller l'élément d'actionnement (106) ;
**caractérisé en ce que** le dispositif (108) présente les caractéristiques suivantes :
une bague de réglage (114) supportée à rotation, avec un contour de commande (202) pour guider l'élément de verrouillage (112) entre la première position et la deuxième position.

2. Dispositif (108) selon la revendication 1, **caractérisé en ce que** le contour de verrouillage (200) est formé par un évidement dans le peigne d'encliquetage (110), un contour de l'évidement correspondant à un contour de l'élément de verrouillage (112).

3. Dispositif (108) selon l'une quelconque des revendications précédentes, **caractérisé en ce que** le contour de commande (202) est formé par une rainure s'étendant dans la bague de réglage (114), la rainure, dans une première portion de rainure (204), s'étendant plus près d'un contour extérieur (208) que d'un contour intérieur (210) de la bague de réglage (114), et dans une deuxième portion de rainure (206), se rapprochant du contour intérieur (210) de la bague de réglage (114), la première portion de rainure (204) étant formée de manière à guider l'élément de verrouillage (112) dans la première position et la deuxième portion de rainure (206) étant réalisée de manière à guider l'élément de verrouillage (112) de la première position dans la deuxième position.

4. Dispositif (108) selon l'une quelconque des revendications précédentes, **caractérisé en ce que** l'élément de verrouillage (112) présente, au niveau d'un côté tourné vers le contour de commande (202), une saillie (216) qui est réalisée de manière à être en prise avec le contour de commande (202) pour guider l'élément de verrouillage (112).

5. Dispositif (108) selon l'une quelconque des revendications précédentes, **caractérisé en ce que** le peigne d'encliquetage (110) est disposé entre la bague de réglage (114) et l'élément d'actionnement (106) et l'élément de verrouillage (112) est disposé radialement par rapport au peigne d'encliquetage (110) et à la bague de réglage (114) et est réalisé de manière à être déplacé entre la première position et la deuxième position dans la direction radiale par rapport au peigne d'encliquetage (110) et à la bague de réglage (114).

6. Dispositif (108) selon l'une quelconque des revendications précédentes, **caractérisé en ce que** le dispositif (108) présente en outre une goupille d'encliquetage (300) qui est réalisée de manière à s'engager dans un contour d'encliquetage du peigne d'encliquetage (110) dans une première position et à libérer le peigne d'encliquetage (110) en vue d'un mouvement de rotation dans une deuxième position, le peigne d'encliquetage (110) présentant en outre un élément de butée et la bague de réglage supportée à rotation (114) présentant en outre une came de commande (218) et un ergot (220), la came de commande (218) étant formée de manière à déplacer la goupille d'encliquetage (300) de la première position dans la deuxième position dans le cas d'un mouvement de rotation de la bague de réglage (114), et l'ergot (220) étant formé de manière à entraîner l'élément de butée lors du mouvement de rotation de la bague de réglage (114), afin de faire tourner le peigne d'encliquetage (110) pour déplacer l'élément d'actionnement (106) dans une position de stationnement.

7. Dispositif (108) selon la revendication 6, **caractérisé en ce que** le contour de commande (202) s'étend dans la bague de réglage (114) dans la région de la came de commande (218).

8. Dispositif (108) selon l'une quelconque des revendications précédentes, **caractérisé en ce que** le dispositif (108) présente en outre un élément d'accouplement (222) accouplant la bague de réglage (114) à un actionneur, lequel élément d'accouplement est réalisé de manière à transmettre un couple de rotation de l'actionneur à la bague de réglage (114) afin de générer le mouvement de rotation de la bague de réglage (114).

9. Dispositif de changement de vitesses (102) pour le changement de vitesses d'une boîte de vitesses automatique (104) d'un véhicule (100), le dispositif de changement de vitesses (102) présentant les caractéristiques suivantes :
un élément d'actionnement (106) qui est réalisé de manière à être déplacé entre une position de stationnement ou une position de marche à vide de la boîte de vitesses automatique (104) et au moins une position de conduite de la boîte de vitesses automatique (104) ; et
un dispositif (108) pour verrouiller un élément d'actionnement (106) selon l'une quelconque des revendications précédentes, le peigne d'encliquetage (110) du dispositif (108) étant accouplé directement à l'élément d'actionnement (106).

10. Procédé (600) pour faire fonctionner un dispositif (108) pour le verrouillage d'un élément d'actionnement (106) d'une boîte de vitesses automatique (104) d'un véhicule (100), le dispositif (108) présentant un peigne d'encliquetage (110) supporté à rotation et pouvant être accouplé directement à l'élément d'actionnement (106), avec un contour de verrouillage (200), le peigne d'encliquetage présentant un contour d'encliquetage périphérique **caractérisé par** une pluralité de rehaussements disposés en forme de peigne, un élément de verrouillage (112), qui est réalisé de manière à être disposé dans une première position à l'extérieur du contour de verrouillage (200) afin de libérer le peigne d'encliquetage (110) en vue d'un mouvement de rotation afin de permettre un mouvement de déplacement de l'élément d'actionnement (106), et de manière à être disposé dans une deuxième position dans le contour de verrouillage (200), afin de fixer le peigne d'encliquetage (110) pour verrouiller l'élément d'actionnement (106), et une bague de réglage (114) supportée de manière rotative avec un contour de commande (202) pour guider l'élément de verrouillage (112) entre la première position et la deuxième position, **caractérisé en ce que** le procédé (600) présente l'étape suivante :
rotation (602) de la bague de réglage (114) afin de déplacer, au moyen du contour de commande (202), l'élément de verrouillage (112) de la première position dans la deuxième position afin de fixer le peigne d'encliquetage (110) pour verrouiller l'élément d'actionnement (106).

11. Procédé (600) selon la revendication 10, **caractérisé en ce que** le procédé (600) présente une étape de rotation en arrière (604) de la bague de réglage (114) afin de déplacer l'élément de verrouillage (112) de la deuxième position dans la première position au moyen du contour de commande (202), afin de libérer le peigne d'encliquetage (110) en vue d'un mouvement de rotation pour permettre un déplacement de réglage de l'élément d'actionnement (106).
